# EUROPÄISCHE PATENTSCHRIFT

(11) **EP 1 141 590 B1**
(45) Veröffentlichungstag und Bekanntmachung des Hinweises auf die Patenterteilung: **13.11.2002**
(21) Anmeldenummer: 99965450.2
(22) Anmeldetag: 13.12.1999
(51) Int. Cl.: F16H 61/12

(54) **ELEKTRONISCH-HYDRAULISCHE STEUERUNG FÜR ANTRIEBSSYSTEME VON FAHRZEUGEN MIT AUTOMATISCHEM GANGWECHSEL**
ELECTRONIC-HYDRAULIC CONTROL FOR AUTOMOBILE DRIVE SYSTEMS WITH AUTOMATIC GEAR SHIFTING
COMMANDE ELECTRONIQUE-HYDRAULIQUE POUR SYSTEMES D'ENTRAINEMENT DE VEHICULES A CHANGEMENT DE RAPPORT AUTOMATIQUE

(30) Priorität: 18.12.1998 DE 19858541
(43) Veröffentlichungstag der Anmeldung: 10.10.2001
(60) Teilanmeldung: 02006967.0
(73) Patentinhaber: ZF FRIEDRICHSHAFEN Aktiengesellschaft, 88038 Friedrichshafen (DE)
(72) Erfinder: GIERER, Georg, D-88079 Kressbronn (DE); SCHMIDT, Thilo, D-88074 Meckenbeuren (DE); STEINHAUSER, Klaus, D-88079 Kressbronn (DE)
(86) Internationale Anmeldenummer: EP9909851
(87) Internationale Veröffentlichungsnummer: WO00037835

(56) Entgegenhaltungen:
- WO-A-84/00522
- WO-A-90/04732
- DE-A- 3 729 627
- DE-A- 3 836 421

## Beschreibung

Die Erfindung bezieht sich auf eine elektronisch-hydraulische Steuereinrichtung eines automatisch schaltenden Kraftfahrzeug-Getriebes, bei welchem zur Schaltung einzelner Gangstufen hydraulisch ein- und ausrückbare Reibkupplungen bzw. Bremsen angesteuert werden, indem in Abhängigkeit von Betriebsparametern des Kraftfahrzeug-Getriebes und eines Antriebsmotors sowie Einrichtungen zur Schaltund/oder Fahrprogramm-Beeinflussung die Betätigungseinrichtungen von der elektronisch-hydraulischen Steuereinrichtung mit Druck beaufschlagt werden.

Eine elektronisch-hydraulische Steuereinrichtung eines automatisch schaltenden Kraftfahrzeug-Getriebes der vorgenannten Gattung ist aus der EP 0 440 748 B1 bekannt. In diesem Steuersystem ist jeder Betätigungseinrichtung ein Steuerventil zugeordnet und die Magnetventile und Schaltventile, welche zur Ansteuerung der Steuerventile genutzt werden, können Mehrfach-Funktionen übernehmen. Das Steuergerät dieser Getriebesteuerung weist eine Einrichtung zur Fehlerüberwachung auf, wobei beim Auftreten des Fehlersignals ein zugeordnetes Magnetventil oder Drucksteuerventil derart umgesteuert wird, daß sich das Kraftfahrzeug-Getriebe zumindest phasenweise im Leerlauf befindet. Für ein Kraftfahrzeug ist es notwendig, auch bei einem Defekt der elektronischen Steuerung weiterfahren zu können.

Der Erfindung liegt die Aufgabe zugrunde, eine elektronisch-hydraulische Getriebesteuerung für ein Getriebe mit automatischem Gangwechsel, vorzugsweise einem Sechsgang-Getriebe, zu schaffen, bei welcher die Kupplungen oder Bremsen des Getriebes durch ein elektronisches Steuergerät ansteuerbar sind und bei Ausfall des elektronischen Steuergerätes automatisch ein Notgang geschaltet wird, welcher dergestalt ausgeführt ist, daß bei Fahrten in den oberen Getriebegängen (vier bis sechs) im Fehlerfall in einen oberen Gang und bei Fahrten in den unteren Gängen (eins bis drei) im Fehlerfall in einen unteren Gang geschaltet wird.

Diese Aufgabe wird mit einer, auch die kennzeichnenden Merkmale des Hauptanspruchs aufweisenden, gattungsgemäßen, elektronisch-hydraulischen Getriebesteuerung gelöst, bei welcher die Kupplungen oder Bremsen direkt von dem elektronischen Steuergerät ansteuerbar sind, indem elektrische Drucksteuerventile oder elektrische Magnetventile von dem elektronischen Steuergerät angesteuert werden und diese wiederum Hydraulikventile ansteuern, die abhängig von dem Ansteuerdruck der elektrischen Drucksteuerventile die Betätigungseinrichtungen der Kupplungen oder Bremsen mit Druck beaufschlagen.

Die Magnetventile oder elektrischen Drucksteuerventile nehmen im stromlosen Zustand immer eine vorgegebene Stellung ein, bei welcher über entsprechende Ventilkombinationen der Notgang eingestellt wird. Dies ist erforderlich, da auch bei Ausfall des elektronischen Steuergeräts eine Weiterfahrt ermöglicht werden muß. Dadurch, daß die Magnetventile und elektrischen Steuerventile im stromlosen Zustand eine vorgegebene Stellung einnehmen, wird bei Eintreten des Notfalls die Kupplung oder Bremse, welche für den Notgang geschaltet werden muß, nicht mit einem geregelten Druck, sondern mit dem vollen Systemdruck beaufschlagt.

Um eine thermische Belastung der Notgang-Kupplungen zu verhindern, darf der Gangsprung vom zuvor betriebenen Gang zum Notgang nicht zu groß sein. Aus diesem Grund sind die Steuerventile so geschaltet, daß in einem zuvor gefahrenen oberen Gang vorzugsweise der vierte bis sechste Gang, in einem oberen Gang vorzugsweise der fünfte Gang geschaltet wird und bei einer Fahrt in den unteren Gängen, vorzugsweise den Gängen eins bis drei, in einen unteren Gang, vorzugsweise den dritten Gang, geschaltet wird. Der Rückwärtsgang kann im Notbetrieb direkt durch Verschieben des Wählschiebers eingelegt werden.

Da beim Betrieb in einem Notgang während der Fahrt nicht mehr geschaltet werden kann, besteht die Möglichkeit, daß bei eingelegtem fünften Gang als Notgang das Fahrzeug, z. B. bei einem Abbremsvorgang an einer Ampel, in diesem fünften Gang nicht mehr anfahren kann. Indem der Systemdruck für kurze Zeit, z. B. durch Abschalten des Verbrennungsmotors, auf Null gesetzt wird, schalten die Steuerventile dergestalt um, daß bei erneutem Start des Verbrennungsmotors bei einem Defekt des elektronischen Steuergeräts automatisch der dritte Gang geschaltet wird.

Da diese elektronisch-hydraulische Getriebesteuerung vorzugsweise für ein Sechsgang-Automatgetriebe verwendet wird, sind die Steuerventile, welche die Kupplungen und Bremsen ansteuern, so ausgelegt, daß sie zwei unterschiedliche Ventilkennlinien aufweisen. Dies ist notwendig, da bei einem Sechsgang-Automatgetriebe Kupplungen oder Bremsen in verschiedenen Gängen betätigt werden müssen, um in Kombination mit anderen Kupplungen oder Bremsen Gänge zu schalten. Somit wird eine Kupplung sowohl z. B. im dritten als auch im fünften Gang zum Einlegen der Gänge betätigt.

Da jedoch das Drehmoment an der Kupplung in einem unteren Gang eine Differenz zu dem Drehmoment der gleichen Kupplung im oberen Gang aufweist, ist es notwendig, die Betätigungseinrichtung dieser Kupplung je nach geschaltetem Gang mit unterschiedlichen Drücken zu beaufschlagen. Es werden, je nach Gang-Kombination, die Steuerventile entweder nur von einer Fläche mit Druck beaufschlagt oder, wenn eine zweite Ventilkennlinie benötigt wird, die Steuerventile von einer weiteren Fläche mit Druck beaufschlagt, wobei die Fläche der einen druckbeaufschlagten Seite eine Differenz zur weiteren Fläche aufweist. Hierdurch wird bei gleichem Ansteuerdruck ein unterschiedlicher Kupplungsdruck erzeugt.

Weitere Ausgestaltungen der Erfindung sind der Figuren-Beschreibung zu entnehmen.
Es zeigen:
- Fig. 1: ein Getriebeschema eines Sechsgang-Getriebes;
- Fig. 2: eine Tabelle der in den einzelnen Gängen betätigten Reibkupplungen und Bremsen;

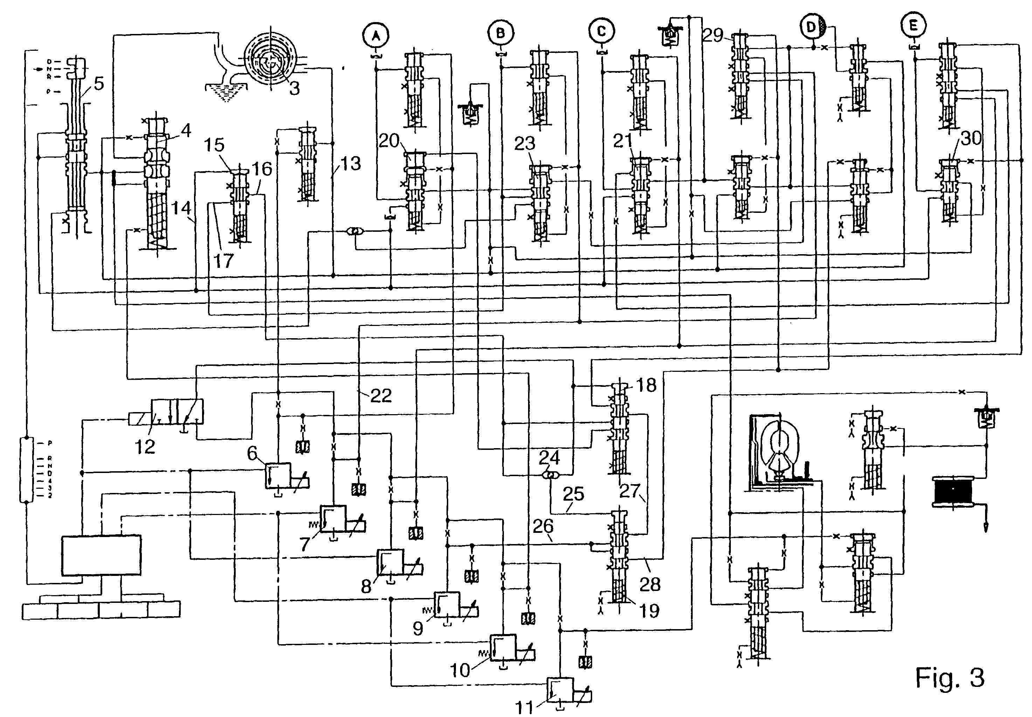

- Fig. 3: ein vereinfacht dargestelltes Steuerschema der erfindungsgemäßen Steuereinrichtung und
- Fig. 4: eine Tabelle, bei welcher die geschalteten Magnet- und elektrischen Drucksteuerventile zu jedem geschalteten Gang dargestellt sind.

### Fig. 1:

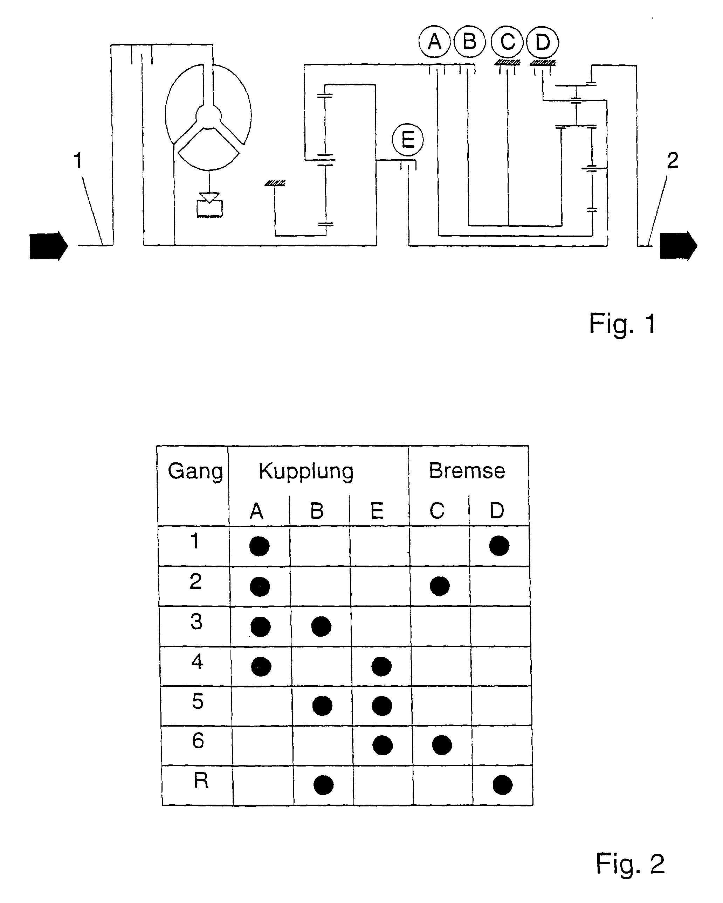

Das dargestellte Getriebeschema zeigt ein Sechsgang-Getriebe in Planetenbauweise, bei welchem die Antriebswelle 1 von einem nicht dargestellten Verbrennungsmotor angetrieben wird. Über die Kupplungen A, B, E und Bremsen C, D ist die Antriebswelle 1 mit der Abtriebswelle 2 verbindbar. Die geschalteten Kupplungen bzw. Bremsen zu den korrespondierenden Gängen sind Fig. 2 zu entnehmen.

### Fig. 2:

In der dargestellten Tabelle ist ersichtlich, welche Kupplungen bzw. Bremsen geschlossen sein müssen, um die bestimmten Gänge zu schalten.

### Fig. 3:

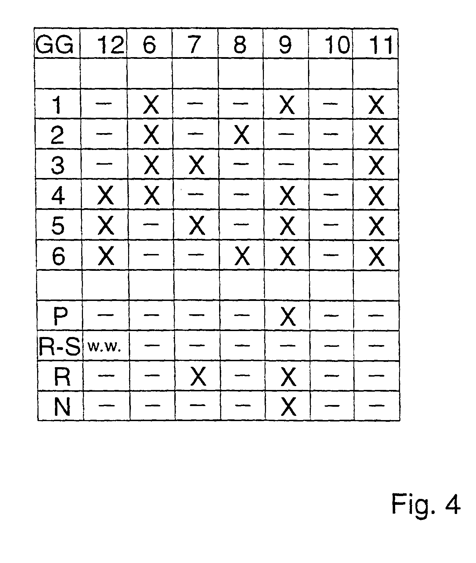

Von einem nicht dargestellten Verbrennungsmotor wird eine Pumpe 3 angetrieben, welche den Systemdruck für die elektro-hydraulische Getriebesteuerung liefert. Der Systemdruck wird von dem Systemdruckventil 4 eingeregelt. Wird der Wählschieber in eine Vorwärtsfahrtstellung verschoben, so werden, je nach Parameter des Verbrennungsmotors und des Automatgetriebes, die elektrischen Drucksteuerventile 6, 7, 8, 9, 10, 11 und Magnetventile 12, wie in der Tabelle in Fig. 4 ersichtlich, angesteuert. Ist z. B. der zweite Gang eingelegt, so versorgt die Pumpe 3 die Steuerung mit Druckmedium über einen Kanal 13, welches vom Systemdruckventil auf ein vorgegebenes Niveau eingesteuert wird. Über den Kanal 14 wird das Reversierventil 15 umgesteuert, dadurch wird der Kanal 16 mit dem Kanal 17 verbunden. Das elektronische Steuergerät überprüft, ob die Gangwahl zulässig ist und steuert dann die elektrischen Drucksteuerventile 6, 8 und 11 an. In diesem Zustand ist das Notfahr-Ventil 18 und das Schaltventil 19 in Ausgangsstellung. Das Steuerventil 20 wird umgesteuert und die Kupplung A geschlossen. Das Steuerventil 21 wird umgesteuert und die Bremse C geschlossen. Somit ist der zweite Gang eingelegt. Tritt nun in den Gängen eins bis drei eine Störung des elektronischen Steuergerätes auf, so werden die Magnetventile 12 und die elektrischen Drucksteuerventile 6, 7, 8, 9, 10, 11 stromlos geschaltet. Da das Drucksteuerventil 7 stromlos ist, wird das elektrische Drucksteuerventil 7 dergestalt von seiner Feder umgesteuert, daß das Steuerventil 23 über den Kanal 22 umgesteuert wird und die Kupplung B ungeregelt schließt. Da nach wie vor das Reversierventil 15 mit Druck beaufschlagt ist, ist der Kanal 17 mit dem Kanal 16 verbunden und der Druck, welcher auf die Betätigungseinrichtung der Kupplung B wirkt, wird über das Notfahrventil 18 zum Steuerventil 20 geleitet. Das Steuerventil 20 wird somit mit Druck beaufschlagt, so daß die Kupplung A geschlossen bleibt. Ebenso wird über den Kanal 16 das Ventil 24 umgesteuert und der Kanal 25 mit Druck beaufschlagt. Das Schaltventil 19 wird umgesteuert, so daß die Verbindung vom Kanal 26 auf den Kanal 27 umgestellt wird und somit der Kanal 28 drucklos wird, wodurch das Steuerventil 29 umsteuert und die Kupplung D drucklos geöffnet ist. Somit ist bei Ausfall des elektronischen Steuergeräts in den unteren Gängen gewährleistet, daß der dritte Gang bei einem Notfall automatisch eingelegt wird. Tritt ein Fehler des elektronischen Steuergeräts bei einem der eingelegten oberen Gänge auf, so werden ebenfalls die elektrischen Drucksteuerventile 6, 7, 8, 9, 10, 11 und die Magnetventile 12 stromlos geschaltet. Wie zuvor beschrieben, wird das elektrische Drucksteuerventil 7 über seine Feder umgesteuert und somit die Kupplung B geschlossen. Bei den eingelegten oberen Gängen 4, 5 und 6 ist das Magnetventil 12 bei normalem Betrieb des elektronischen Steuergerätes bestromt. Aus diesem Grund ist beim Eintreten des Fehlers beim elektronischen Steuergerät das Notfahrventil 18 noch gegen seine Feder verschoben. Da im stromlosen Zustand das elektrische Drucksteuerventil 9 so umgesteuert ist, daß der Kanal 26 mit Druck beaufschlagt ist und das Schaltventil 19 umgesteuert bleibt, da das Ventil 24 über das Reversierventil 15 umgesteuert wird, wirkt auf die Differenzfläche im Notfahrventil 18 der Druck von Kanal 26 und hält das Notfahrventil 18 in seiner unteren Stellung. Über den Kanal 27 und das Notfahrventil 18 wird das Steuerventil 30 umgesteuert, so daß die Kupplung E geschlossen bleibt. Somit ist gewährleistet, daß bei einem Fehler des elektronischen Steuergerätes bei einem eingestellten oberen Gang automatisch in den fünften Gang geschaltet wird. Wird das Fahrzeug nun in diesem geschalteten fünften Notgang bis zum Stillstand abgebremst, ist es unter bestimmten Bedingungen nicht mehr möglich, im fünften Gang genügend Drehmoment zu erzeugen, um Anfahren zu können. Aus diesem Grund muß der Systemdruck für kurze Zeit unterbrochen werden, welches durch Abschalten des Verbrennungsmotors oder durch manuelles Umschalten eines weiteren Ventils geschehen kann. Dabei geht das Notfahrventil 18 in seine Ausgangsstellung und bei einem Neustart des Motors und dem Einlegen der Fahrposition wird nun wieder automatisch der dritte Gang eingelegt.

In einer weiteren Ausgestaltung der Erfindung sind die Steuerventile, welche den Kupplungen und Bremsen zugeordnet sind, von beiden Seiten mit Druck beaufschlagbar, jedoch weisen sie auf den beiden Seiten unterschiedliche Flächen auf, somit ist es möglich, durch einerseits Druckbeaufschlagen einer Fläche eine erste Ventilkennlinie zu realisieren und andererseits durch Druckbeaufschlagen einer zweiten Fläche und einer ersten Fläche eine zweite Ventilkennlinie zu realisieren. Dies ist notwendig, da bestimmte Kupplungen oder Bremsen in mehreren Gängen benützt werden, z. B. wird die Kupplung C in den Gängen zwei und sechs beaufschlagt.

### Bezugszeichen

- 1: Antriebswelle
- 2: Abtriebswelle
- 3: Pumpe
- 4: Systemdruck-Ventil
- 5: Wählschieber
- 6: elektrisches Drucksteuerventil
- 7: elektrisches Drucksteuerventil
- 8: elektrisches Drucksteuerventil
- 9: elektrisches Drucksteuerventil
- 10: elektrisches Drucksteuerventil
- 11: elektrisches Drucksteuerventil
- 12: Magnetventil
- 13: Kanal
- 14: Kanal
- 15: Reversierventil
- 16: Kanal
- 17: Kanal
- 18: Notfahrventil
- 19: Schaltventil
- 20: Steuerventil
- 21: Steuerventil
- 22: Kanal
- 23: Steuerventil
- 24: Ventil
- 25: Kanal
- 26: Kanal
- 27: Kanal
- 28: Kanal
- 29: Steuerventil
- 30: Steuerventil
- A: Kupplung
- B: Kupplung
- C: Bremse
- D: Bremse
- E: Kupplung

## Patentansprüche

1. Elektronisch-hydraulische Steuereinrichtung eines automatisch schaltenden Kraftfahrzeug-Getriebes mit zur Schaltung einzelner Gangstufen dienenden, hydraulisch einund ausrückbaren Reibkupplungen bzw. Bremsen (A, B, C, D, E), deren Betätigungseinrichtungen jeweils ein Steuerventil (20, 21, 23, 30) zugeordnet ist, mit einem als Mikroprozessor ausgebildeten Steuergerät, mittels welchem in Abhängigkeit von Betriebsparametern des Kraftfahrzeug-Getriebes und eines Antriebsmotors sowie einer Einrichtung zur Schalt- und/oder Fahrprogramm-Beeinflussung die Betätigungseinrichtung beherrschende, elektrisch betätigte Magnetventile (12) und Drucksteuerventile (6, 7, 8, 9, 10, 11) verstellbar sind, **dadurch gekennzeichnet, daß** bei Ausfall des Steuergerätes die Magnetventile (12) und die Drucksteuerventile (6, 7, 8, 9, 10, 11) stromlos geschaltet werden und dabei in einem zuvor eingelegten niedrigen Gang automatisch in einen niedrigen Gang, vorzugsweise den dritten Gang, geschaltet wird und in einem zuvor eingelegten höheren Gang automatisch in einen höheren Gang, vorzugsweise einen fünften Gang, geschaltet wird.

2. Elektronisch-hydraulische Steuereinrichtung nach Anspruch 1, **dadurch gekennzeichnet, daß** bei einem von dem Steuergerät geschalteten niedrigen Gang ein Notfahrventil (18) nicht druckbeaufschlagt ist und daß bei einem von dem Steuergerät geschalteten höheren Gang ein Notfahrventil (18) druckbeaufschlagt ist.

3. Elektronisch-hydraulische Steuereinrichtung nach Anspruch 1, **dadurch gekennzeichnet, daß** ein Schaltventil (19), welches mit einem Notfahr-Ventil (18) hydraulisch verbunden ist, bei Ausfall des Steuergerätes bei zuvor geschaltetem niedrigen Gang umgesteuert wird und damit die Kupplung oder Bremse, welche für einen höheren Gang geschaltet sein muß, drucklos ist.

4. Elektronisch-hydraulische Steuereinrichtung nach einem der Ansprüche 1 bis 3, **dadurch gekennzeichnet, daß** Steuerventile (20, 21, 23) in ihren Abmessungen verschiedene druckbeaufschlagbare Flächen aufweisen, deren Kraft im druckbeaufschlagten Zustand einander addieren.

5. Elektronisch-hydraulische Steuereinrichtung nach Anspruch 4, **dadurch gekennzeichnet, daß** beide druckbeaufschlagbaren Flächen von Steuerventilen angesteuert werden, wenn die dem Steuerventil (20, 21, 23) nachgeschaltete Kupplung oder Bremse (A, B, C, D, E) an einer Schaltung eines höheren Gangs beteiligt ist und nur eine druckbeaufschlagbare Fläche von Steuerventilen angesteuert wird, wenn die dem Steuerventil (20, 21, 23) nachgeschaltete Kupplung oder Bremse (A, B, C, D, E) an einer Schaltung eines niedrigeren Ganges beteiligt ist.

## Claims

1. Electronic-hydraulic control device of an automatic automobile transmission with hydraulically engagable and disengagable friction clutches and brakes (A, B, C, D, E) that are used to shift individual gears and that each have a control valve (20, 21, 23, 30) assigned to their actuating devices, with a control device formed as a microprocessor, by means of which, depending on operating parameters of the automobile transmission and of a drive engine as well as of a device for influencing the shifting and/or driving program, electrically actuated solenoid valves (12) and pressure control valves (6, 7, 8, 9, 10, 11) governing the actuating device are adjustable, **characterized in that** in the event of failure of the control device the solenoid valves (12) and pressure control valves (6, 7, 8, 9, 10, 11) are switched currentless and automatic shifting to a lower gear, preferably the third gear, is effected in the event that a low gear was previously selected and to a higher gear, preferably the fifth gear, in the event that a higher gear was previously selected.

2. Electronic-hydraulic control device according to claim 1, **characterized in that**, in the event of a low gear being selected by the control device, a limp-home valve (18) is not pressurized and that in the event of a higher gear being selected by the control device, a limp-home valve (18) is pressurized.

3. Electronic-hydraulic control device according to claim 1, **characterized in that** a switching valve (19) that is connected hydraulically to a limp-home valve (18) is reversed in case of failure of the control device in the event that a low gear was previously selected and the clutch or brake that has to be selected for a higher gear is thus pressureless.

4. Electronic-hydraulic control device according to one of claims 1 to 3, **characterized in that** control valves (20, 21, 23) have differently dimensioned pressurizable surfaces, the force of which are added to one another in the pressurized state.

5. Electronic-hydraulic control device according to claim 4, **characterized in that** both pressurizable surfaces of control valves are controlled if the clutch or brake (A, B, C, D, E) connected in series to the control valve (20, 21, 23) is involved in shifting to a higher gear and only one pressurizable surface of control valves is controlled if the clutch or brake (A, B, C, D, E) connected in series to the control valve (20, 21, 23) is involved in shifting to a lower gear.

## Revendications

1. Dispositif de commande électronique-hydraulique de la boîte de vitesses d'un véhicule automobile à changement de rapport automatique, comprenant des embrayages à friction pouvant être embrayés et débrayés hydrauliquement, respectivement des freins (A, B, C, D, E) qui servent au changement de différents étages de vitesses, et au dispositif d'actionnement de chacun desquels est affectée une valve de commande (20, 21, 23, 30), un appareil de commande constitué par un microprocesseur, au moyen duquel, en fonction de paramètres de fonctionnement de la boîte de vitesses du véhicule automobile et d'un moteur d'entraînement, ainsi que d'un dispositif destiné à intervenir sur le programme de changement de rapport et/ou de conduite, des électrovalves (12) actionnées électriquement et des valves de commande de la pression (6, 7, 8, 9, 10, 11), qui régissent le dispositif d'actionnement, peuvent être manoeuvrées, **caractérisé en ce qu'**en cas de défaillance de l'appareil de commande, les électrovalves (12) et les valves de commande de la pression (6, 7, 8, 9, 10, 11) sont déconnectées de la tension et, à ce moment, dans le cas d'une vitesse basse précédemment enclenchée, on passe automatiquement à une vitesse basse, de préférence à la troisième vitesse et, dans le cas d'une vitesse supérieure précédemment enclenchée, on passe automatiquement à une vitesse supérieure, de préférence à une cinquième vitesse.

2. Dispositif de commande électronique-hydraulique selon la revendication 1, **caractérisé en ce que**, dans le cas d'une vitesse basse enclenchée par l'appareil de commande, une valve de conduite de détresse (18) n'est pas chargée par une pression, et **en ce que**, dans le cas d'une vitesse supérieure enclenchée par l'appareil de commande, une valve de conduite de détresse (18) est chargée par une pression.

3. Dispositif de commande électronique-hydraulique selon la revendication 1, **caractérisé en ce que**, en présence d'une défaillance de l'appareil de commande alors qu'une basse vitesse a été précédemment enclenchée, une valve de changement de rapport (19), qui est reliée hydrauliquement à une valve de conduite de détresse (18), est inversée et, sous cet effet, l'embrayage ou frein qui doit être manoeuvré pour une vitesse supérieure est hors pression.

4. Dispositif de commande électronique-hydraulique selon l'une des revendications 1 à 3, **caractérisé en ce que** les valves de commande (20, 21, 23) comportent des surfaces pouvant être chargées par une pression qui sont différentes dans leurs dimensions et dont les forces s'additionnent mutuellement à l'état chargé par une pression.

5. Dispositif de commande électronique-hydraulique selon la revendication 4, **caractérisé en ce que** les deux surfaces de valves de commande pouvant être chargées par une pression sont attaquées lorsque l'embrayage ou frein (A, B, C, D, E), situé en aval de la valve de commande (20, 21, 23), participe à un changement de rapport aboutissant à une vitesse supérieure et seule une surface de valve de commande pouvant être chargée par une pression est attaquée lorsque l'embrayage ou frein (A, B, C, D, E) situé en aval de la valve de commande (20, 21, 23) participe à un changement de rapport aboutissant à une vitesse inférieure.
